# EUROPÄISCHE PATENTSCHRIFT

(11) **EP 3 513 146 B1**
(45) Veröffentlichungstag und Bekanntmachung des Hinweises auf die Patenterteilung: **02.11.2022**
(21) Anmeldenummer: 17784861.1
(22) Anmeldetag: 07.09.2017
(51) Int. Cl.: G01C 21/32, G01C 21/34

(54) **VERFAHREN UND DATENVERARBEITUNGSANLAGE ZUR ERZEUGUNG VON KARTENDATEN EINER DIGITALEN KARTE**
METHOD AND APPARATUS FOR THE PREPARATION OF DATA FOR THE PRODUCTION OF MAP DATA OF A DIGITAL MAP
PROCEDE ET APPAREIL POUR LA PREPARATION DE DONNEES POUR LA PRODUCTION DE DONNEES DE CARTE D'UNE CARTE DIGITALE

(30) Priorität: 15.09.2016 DE 102016217654
(43) Veröffentlichungstag der Anmeldung: 24.07.2019
(73) Patentinhaber: Bayerische Motoren Werke Aktiengesellschaft, 80809 München (DE)
(72) Erfinder: LOTTES, Alexander, 85551 Kirchheim b. München (DE); RICHTER, Werner, 82008 Unterhaching (DE)
(86) Internationale Anmeldenummer: PCT/EP2017/072470
(87) Internationale Veröffentlichungsnummer: WO 2018/050539

(56) Entgegenhaltungen:
- EP-A1- 2 410 294
- DE-A1-102010 028 090

## Beschreibung

Die vorliegende Erfindung betrifft ein Verfahren zur Erzeugung von Kartendaten einer digitalen Karte aus Rohdaten der digitalen Karte sowie eine Datenverarbeitungsanlage hierzu.

Digitalen Karten kommt in einer modernen Gesellschaft eine stetig wachsende Bedeutung zu. Abdeckungsgrad, Genauigkeit und Aktualität digitaler Karten werden fortlaufend verbessert. Nutzer können digitale Karten nicht mehr nur an stationären Computern (z.B. Personal Computer, PC) nutzen, sondern auch mittels tragbarer Mobilgeräte (z.B. Smartphones) sowie in Navigationssystemen moderner Kraftfahrzeuge. Digitale Karten werden heutzutage nicht mehr ausschließlich für die Routenplanung genutzt, sondern auch für zahlreiche andere Dienste, die unter dem englischsprachigen Sammelbegriff "Location-based services" bekannt sind.

Die technische Ausgestaltung einer digitalen Karte sowie die Art und der Umfang der in der Karte enthaltenen Kartenobjekte können je nach Anwendungszweck und / oder Anbieter der Karte stark variieren. Es hat sich daher als zweckmäßig erwiesen, zur Erzeugung von Kartendaten einer digitalen Karte Rohdaten der digitalen Karte zu verwenden und diese derart zu verarbeiten und / oder zu ergänzen, dass eine digitale Karte mit den gewünschten Eigenschaften entsteht. Der Vorgang der Erzeugung von Kartendaten einer digitalen Karte aus Rohdaten der digitalen Karte wird auch als Kompilierung bezeichnet.

Beispielsweise können bei der Kompilierung Kartenobjekte (z.B. points of interest, POI) hinzugefügt werden. Ferner können bestehenden Kartenobjekten Attribute zugewiesen werden. So können beispielsweise einem Straßenabschnitt (in diesem Zusammenhang auch mit dem Begriff "Link" bezeichnet) Attribute wie z.B. "Straßentyp" zugewiesen werden. Aufgrund der Vielzahl von Kartenobjekten werden hierfür gemäß dem Stand der Technik globale Zuordnungsregeln verwendet. Beispielsweise könnte Links, die außerhalb eines Ortes in Deutschland liegen und deren mittlere Geschwindigkeit zwischen 90 km/h und 110 km/h liegt, als Attribut der Straßentyp "Landstraße" zugeordnet werden. Diese Vorgehensweise ermöglicht es, die digitale Karte automatisiert mit einer Vielzahl von Attributen anzureichern. Nachteilig ist jedoch die mangelnde Flexibilität dieses Verfahrens.

DE 10 2010 028 090 A1 beschreibt ein Navigationssystem und Navigationsverfahren für Fahrzeuge, bei denen gespeicherte Navigationsdaten Vertrauenslevel aufweisen, welche ein Vertrauen in eine Korrektheit der Navigationsdaten angeben. Bei der Benutzung des Navigationssystems kann ein sogenanntes "Map Matching" durchgeführt und dabei das Vertrauenslevel von Navigationsdaten angepasst werden.

EP 2 410 294 A1 schlägt zur Verbesserung von Routenberechnungen vor, in Kartendaten enthaltene Kreuzungen mit einem Kostenmodell zu versehen, dessen Parameter anhand tatsächlicher Fahrtdaten anzupassen.

Ausgehend vom Stand der Technik stellt sich die Aufgabe, die Erzeugung von Kartendaten einer digitalen Karte aus Rohdaten der digitalen Karte flexibler zu gestalten.

Die Aufgabe wird gelöst bei einem Verfahren und einer Datenverarbeitungsanlage mit den Merkmalen der unabhängigen Ansprüche. Vorteilhafte Weiterbildungen der Erfindung sind Gegenstände der abhängigen Ansprüche.

Das erfindungsgemäße Verfahren dient der Erzeugung von Kartendaten einer digitalen Karte aus Rohdaten der digitalen Karte. Die Rohdaten umfassen zumindest ein Kartenobjekt und je einen dem zumindest einen Kartenobjekt zugeordneten Wert zumindest eines Attributs. Mit anderen Worten enthalten die Rohdaten Kartenobjekte wie beispielsweise Straßenabschnitte ("Links") und Verbindungsknoten ("Nodes").

Zu einem (oder mehreren oder allen) dieser Kartenobjekte können die Rohdaten Werte eines Attributs umfassen. Ein Attribut kann in diesem Zusammenhang auch als Eigenschaft eines Kartenobjekts beschrieben werden. Ein Attribut eines Straßenabschnitts kann beispielsweise dessen zulässige Höchstgeschwindigkeit sein. Für einen bestimmten Straßenabschnitt können die Rohdaten beispielsweise den Wert "80 km/h" des Attributs "Höchstgeschwindigkeit" umfassen. Selbstverständlich können die Rohdaten zu einem Kartenobjekt je einen Wert zu mehr als einem Attribut umfassen. Umgekehrt können die Rohdaten Kartenobjekte enthalten, zu denen kein Wert eines Attributs gespeichert ist.

Die Kartendaten der digitalen Karte umfassen das zumindest eine Kartenobjekt und einen dem Kartenobjekt zugeordneten Wert eines abgeleiteten Attributs. Dabei wird zur Erzeugung der Kartendaten ein globaler Regelsatz angewendet, der zumindest eine Zuordnungsregel umfasst, welche zumindest einem Wert zumindest eines Attributs der Rohdaten genau einen Wert des abgeleiteten Attributs zuweist. Mit anderen Worten werden den Kartenobjekten bei der erfindungsgemäßen Erzeugung der Kartendaten zusätzliche Attribute (also Eigenschaften) zugeschrieben, deren Werte sich aus dem globalen Regelsatz ergeben.

Eine Zuordnungsregel im Sinne der Erfindung ist eine mathematische Funktion, die auch als Zuordnungstabelle ausgestaltet sein kann. Eine Zuordnungsregel weist also zumindest einem Wert zumindest eines Attributs genau einen Wert eines abgeleiteten Attributs zu. Umfasst der globale Regelsatz für einen bestimmten Wert eines Attributs oder für eine bestimmte Kombination von Werten mehrerer Attribute keine Zuordnungsregel, so wird dem Kartenobjekt der Kartendaten kein Wert des abgeleiteten Attributs zugeordnet.

Erfindungsgemäß wird zur Erzeugung der Kartendaten ferner ein objektspezifischer Korrekturdatensatz angewandt. Dieser umfasst für zumindest ein Kartenobjekt je genau einen Wert des zumindest einen abgeleiteten Attributs. Dem zumindest einen Kartenobjekt der Kartendaten wird der in dem Korrekturdatensatz enthaltene Wert des zumindest einen abgeleiteten Attributs zugewiesen.

Mit anderen Worten sieht die Erfindung also vor, dass zunächst auf die an sich im Stand der Technik bekannte Weise die Kartendaten kompiliert werden, wobei mittels des globalen Regelsatzes abgeleitete Attribute vergeben werden. Im weiteren Verlauf des erfindungsgemäßen Verfahrens werden dann mittels des Korrekturdatensatzes Werte der abgeleiteten Attribute korrigiert und / oder neu vergeben. Im Gegensatz zu der Vergabe abgeleiteter Attribute mittels des globalen Regelsatzes erfolgt die Vergabe abgeleiteter Attribute jedoch nicht aufgrund der generischen (also allgemeingültigen) Zuordnungsregeln, sondern in objektspezifischer Weise mittels des individuellen Korrekturdatensatzes.

Die Erfindung ermöglicht es somit, in flexibler Weise auf Ausnahmefälle und Sonderfälle einzugehen, die von dem globalen Regelsatz nicht erfasst werden. Dies ist insbesondere in zwei Fällen von Vorteil. Zum einen kann es vorkommen, dass der mittels des globalen Regelsatzes zugewiesene Wert des abgeleiteten Attributs falsch oder ungenau ist. Dies kann der Fall sein, wenn das betreffende Kartenobjekt "untypische" Eigenschaften hat, die von dem globalen Regelsatz nicht abgebildet werden. Mittels des objektspezifischen Korrekturdatensatzes kann ein solcher falscher oder ungenauer Wert korrigiert, d.h. durch den jeweils richtigen Wert ersetzt, werden. Zum anderen kann es vorkommen, dass mittels des globalen Regelsatzes kein Wert eines bestimmten abgeleiteten Attributs zugewiesen wird, obwohl dies wünschenswert gewesen wäre. Mittels des objektspezifischen Korrekturdatensatzes kann dem Kartenobjekt dann der Wert des abgeleiteten Attributs zugewiesen werden. Umgekehrt kann es auch vorkommen, dass ein Wert eines bestimmten abgeleiteten Attributs zugewiesen wird, obwohl dies nicht hätte geschehen sollen. Mittels des objektspezifischen Korrekturdatensatzes kann bei dem Kartenobjekt dann der zugewiesene Wert des abgeleiteten Attributs wieder entfernt werden.

In vorteilhafter Ausgestaltung umfassen die Kartendaten einen dem Kartenobjekt zugeordneten Bezeichner, wobei der Korrekturdatensatz für das Kartenobjekt dessen Bezeichner und den Wert des abgeleiteten Attributs umfasst. Auf diese Weise kann der Korrekturdatensatz besonders systematisch und effizient strukturiert werden. Beispielsweise kann der Korrekturdatensatz aus einer Tabelle bestehen, in deren Zeilen jeweils der Bezeichner des Kartenobjekts, das abgeleitete Attribut und dessen Wert enthalten sind. Die Bezeichner werden vorteilhafterweise eindeutig vergeben. Jegliche Systematik, die bei der Vergabe der Bezeichner angewendet wird, kann für den Korrekturdatensatz genutzt werden. Schlägt sich beispielsweise die Zugehörigkeit von Kartenobjekten zu einem bestimmten geografischen Gebiet in einem bestimmten Merkmal der jeweiligen Bezeichner nieder (z.B. in einem bestimmen Nummernkreis der Bezeichner) und sollen allen Kartenobjekten in diesem geografischen Gebiet mittels des Korrekturdatensatzes bestimmte Werte des abgeleiteten Attributs zugewiesen werden, so kann der Korrekturdatensatz anstelle der expliziten Nennung aller Kartenobjekte auch das entsprechende Merkmal der jeweiligen Bezeichner (z.B. den Nummernkreis der Bezeichner) enthalten.

Bei einer besonders vorteilhaften Weiterbildung des Verfahrens wird zusätzlich ein Nutzungsdatensatz von einem Nutzer der Kartendaten, insbesondere von einem Kraftfahrzeug empfangen. Der Nutzungsdatensatz umfasst einen Bezeichner eines Kartenobjekts und zumindest einen eine Bewegung des Nutzers bezüglich des Kartenobjekts beschreibenden Bewegungsparameter. In Abhängigkeit des empfangenen Nutzungsdatensatzes wird der Korrekturdatensatz erstellt oder aktualisiert. Mit anderen Worten ist also vorgesehen, Informationen, die bei der Nutzung der digitalen Karte, insbesondere in einem Kraftfahrzeug, gewonnen werden, für die Erstellung oder Aktualisierung des Korrekturdatensatzes zu nutzen. Auf diese Weise kann eine Vielzahl von Informationen gewonnen und nutzbar gemacht werden. Da zur Informationsgewinnung eine Menge (engl. "crowd") von Nutzern beiträgt, wird ein solches Verfahren auch mit dem Begriff "crowd sourcing" umschrieben. Mit besonderem Vorteil werden die Nutzungsdatensätze nicht manuell verarbeitet, sondern mittels automatisierter Algorithmen. Der Fachmann kann hierbei auf eine große Bandbreite an sich bekannter Methoden des maschinellen Lernens sowie der Mustererkennung zurückgreifen.

Die Erfindung wird ferner gebildet durch eine Datenverarbeitungsanlage zur Erzeugung von Kartendaten einer digitalen Karte aus Rohdaten der digitalen Karte. Die erfindungsgemäße Datenverarbeitungsanlage mit den Merkmalen des Anspruchs 4 ist eingerichtet zur Durchführung des erfindungsgemäßen Verfahrens.

In vorteilhafter Ausgestaltung umfasst die Datenverarbeitungsanlage ein Datenauswertungsmodul, das zur Durchführung der in Anspruch 3 aufgeführten zusätzlichen Verfahrensschritte eingerichtet ist. Zu diesem Zweck kann das Datenauswertungsmodul eine Verbindung zum Internet oder zu einem Internet-Server aufweisen, so dass die Nutzungsdatensätze über das Internet von den Nutzern zu dem Datenauswertungsmodul übertragen werden können.

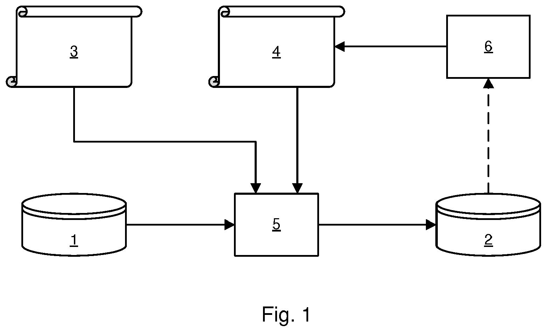

Weitere Ausführungsformen der Erfindung werden nachfolgend anhand einer beispielhaften Darstellung erläutert. Dabei zeigt
- Fig. 1: eine Ausführungsform einer Datenverarbeitungsanlage in schematischer Darstellung.

Es wird darauf hingewiesen, dass es sich bei der dargestellten Figur sowie der zugehörigen Beschreibung lediglich um ein Ausführungsbeispiel der Erfindung handelt. Insbesondere sind Darstellungen von Merkmalskombinationen in der Figur und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei der Darstellung um eine Prinzipdarstellung einer Ausführungsform der Erfindung handelt. Die Anordnung der einzelnen dargestellten Elemente zueinander ist nur beispielhaft gewählt und kann bei anderen Ausführungsformen der Erfindung anders gewählt werden.

Fig. 1 zeigt eine Datenverarbeitungsanlage 5, die auch als Compiler 5 oder Kartencompiler 5 bezeichnet werden kann. In einem Datenspeicher 1 sind Rohdaten 1 der digitalen Karte abgelegt. In einem weiteren Datenspeicher 2 werden die Kartendaten 2 der digitalen Karte abgelegt. Die Datenspeicher 1, 2 können jeweils ein Teil der Datenverarbeitungsanlage 5 sein. Sie können aber auch als separate Einheiten oder als Teile anderer, in Fig. 1 nicht dargestellter Datenverarbeitungseinheiten ausgestaltet sein. Bei den Datenspeichern 1, 2 kann es sich um unterschiedliche Speicherbereiche desselben physikalischen Speichers (z.B. einer Festplatte der Datenverarbeitungsanlage 5) handeln. Zur Erzeugung der Kartendaten 2 greift der Kartencompiler 5 auf einen globalen Regelsatz 3 sowie auf einen Korrekturdatensatz 4 zu.

Das nachfolgende Beispiel soll den Ablauf des erfindungsgemäßen Verfahrens verdeutlichen.

In der nachfolgenden Tabelle I sind beispielhafte Rohdaten 1 dargestellt:

**Tabelle I: Rohdaten 1**

| **Link ID** | **CA** | **MD** | **SL** |
|---|---|---|---|
| R0815 | 1 | 1 | 130 |
| R0816 | 1 | 0 | 80 |
| R0817 | 0 | 1 | 80 |
| R0818 | 0 | 0 | 100 |

Die Rohdaten 1 umfassen vier Kartenobjekte, die die in der ersten Spalte (mit der Überschrift "Link ID") angegebenen Bezeichner haben. Es sei an dieser Stelle darauf hingewiesen, dass der Bezeichner eines Kartenobjekts beim Kompilieren der digitalen Karte geändert oder neu vergeben werden kann. Dies wird anhand des Ausführungsbeispiels im Folgenden noch deutlich werden. Bei den vier Kartenobjekten handelt es sich um "Links", also um Abschnitte von Straßen.

Die Rohdaten 1 umfassen ferner die in den weiteren Spalten angegebenen Attribute CA, MD und SL. Zu jedem dieser Attribute ist für jedes Kartenobjekt ein Wert zugeordnet.

Das Attribut CA (für engl. "control access") betrifft die Eigenschaft, ob der Zugang zu diesem Link beschränkt ist, also beispielsweise nur für Kraftfahrzeuge, nicht aber für Radfahrer oder Fußgänger zulässig ist. Beispielsweise kann ein Objekt mit dem Wert CA=0 keine Zugangsbeschränkung aufweisen, wohingegen bei CA=1 eine Zugangsbeschränkung vorliegt.

Das Attribut MD (für engl. "multiply digitized") betrifft die Eigenschaft, ob der Link zwei Fahrtrichtungen aufweist. Beispielsweise können bei baulich (z.B. durch einen Grünstreifen und / oder eine Leitplanke) getrennten Fahrtrichtungen die Fahrtrichtungen als separate Links (mit separaten Bezeichnern) vorliegen. In diesem Fall ist beispielsweise MD=1. Hingegen kann ein Link zwei Fahrtrichtungen umfassen. Es ist dann MD=0.

Das Attribut SL (für engl. "speed limit") betrifft die zulässige Höchstgeschwindigkeit. Zum Beispiel kann SL=80 bedeuten, dass die zulässige Höchstgeschwindigkeit 80 km/h beträgt.

Die Tabelle II zeigt ein Beispiel eines globalen Regelsatzes 3.

**Tabelle II: Globaler Regelsatz 3**

| **CA** | **MD** | **SL** | **AA1** |
|---|---|---|---|
| 1 | 1 | 130 | 2 |
| 1 | 0 | 80 | 1 |
| 0 | 1 | 80 | 1 |
| 0 | 0 | 100 | 0 |

Der Regelsatz 3 enthält insgesamt vier Zuordnungsregeln, die jeweils einer Zeile der Tabelle II entsprechen. Durch die Zuordnungsregeln wird in Abhängigkeit der Werte der Attribute CA, MD und SL ein Wert des abgeleiteten Attributs AA1 zugewiesen. Es sei angemerkt, dass die vereinfachte Darstellung der Tabelle II unter didaktischen Gesichtspunkten gewählt wurde. Tatsächlich verwendete globale Regelsätze können wesentlich umfangreicher sein. Überdies können die Zuordnungsregeln komplexer sein. Beispielsweise können die Zuordnungsregeln nicht nur exakte Werte (z.B. SL=80) betreffen, sondern Wertebereiche (z.B. 80<SL<120).

Das abgeleitete Attribut AA1 kann beispielsweise den Straßentyp betreffen. So könnte AA1=2 dem Straßentyp "Autobahn" entsprechen. Gemäß der in der ersten Zeile der Tabelle II hinterlegten Zuordnungsregel wird dieser Wert vergeben, wenn ein Link zugangsbeschränkt (CA=1) und nach Fahrtrichtung getrennt (MD=1) ist sowie eine Höchstgeschwindigkeit von 130 km/h aufweist. Ein Wert AA1=1 könnte einem Straßentyp "autobahnähnliche Straße" entsprechen. Ein Wert AA1=0 könnte einem Straßentyp "Landstraße" entsprechen.

Mittels des globalen Regelsatzes 2 werden den Kartenobjekten beim Kompilieren, also dem Erzeugen der Kartendaten 2 aus den Rohdaten 1, die Werte des abgeleiteten Attributs AA1 zugewiesen.

Tabelle III zeigt einen Korrekturdatensatz 4. Mittels des Korrekturdatensatzes 4 werden einzelnen Kartenobjekten, die anhand Ihres in der linken Spalte aufgeführten Bezeichners (Link ID) bezeichnet werden, Werte des abgeleiteten Attributs AA1 zugewiesen. Es sei erneut darauf hingewiesen, dass beim Kompilieren der digitalen Karte neue Bezeichner für die Kartenobjekte vergeben werden können. Die Link IDs der Tabelle III stimmen daher mit den Link IDs der Tabelle I nicht überein.

**Tabelle III: Korrekturdatensatz 4**

| **Link ID** | **AA1** |
|---|---|
| 4711 | 1 |
| 4712 | 1 |
| 4713 | 0 |

Wie der Tabelle III entnommen werden kann, wird dem Kartenobjekt mit dem Bezeichner "4711" der Wert AA1=1 des abgeleiteten Attributs AA1 zugewiesen. Dabei spielt keine Rolle, welchen Wert des abgeleiteten Attributs AA1 das Objekt "4711" aufgrund des globalen Regelsatzes 3 eigentlich zugewiesen bekommen hat. Beispielsweise kann es sich bei dem Link "4711" um eine autobahnähnliche Straße (AA1=1) handeln, die aber untypische Eigenschaften aufweist und deswegen bei Anwendung des globalen Regelsatzes 3 fälschlicherweise als Autobahn (AA1=2) eingeordnet worden wäre.

Ferner wird dem Kartenobjekt mit dem Bezeichner "4712" der Wert AA1=1 des abgeleiteten Attributs AA1 zugewiesen und dem Kartenobjekt mit dem Bezeichner "4713" der Wert AA1=0.

Beispiele für abgeleitete Attribute, die mittels des erfindungsgemäßen Verfahrens zugewiesen werden können, sind der Straßentyp und / oder das Vorhandensein einer baulichen Trennung der Fahrtrichtungen (z.B. Grünstreifen und / oder Leitplanke). Ein weiteres Beispiel betrifft die Wahrscheinlichkeit dafür, dass im Umfeld vorhandene Verkehrsteilnehmer verlässlich sind. Dieses abgeleitete Attribut kann für Fahrerassistenzsysteme von Kraftfahrzeugen bedeutsam sein, die eine teil-, hoch- oder vollautomatisierte Fahrt des Kraftfahrzeugs ermöglichen. Andere Kraftfahrzeuge können beispielsweise als verlässliche Verkehrsteilnehmer eingestuft werden, wohingegen Radfahrer und Fußgänger als nicht-verlässliche Verkehrsteilnehmer eingestuft werden. Es sind auch noch weitere Abstufungen denkbar. So könnten beispielsweise Kinder als besonders wenig verlässlich eingestuft werden. Ein entsprechendes abgeleitetes Attribut AA2, das die Wahrscheinlichkeit dafür wiedergibt, dass im Umfeld vorhandene Verkehrsteilnehmer verlässlich sind, könnte beispielsweise auf einer Autobahn bei AA2=100% liegen und in der Nähe eines Kindergartens oder einer Schule bei AA2=0%.

Anhand des Beispiels dieses abgeleiteten Attributs AA2 soll nachfolgend die Funktionsweise des Datenauswertungsmoduls 6 erläutert werden. In Fig. 1 ist die Verbindung von den Kartendaten 2 zum Datenauswertungsmodul 6 gestrichelt dargestellt. Durch diese Darstellung soll verdeutlicht werden, dass nicht etwa Daten vom Datenspeicher 2 zum Datenauswertungsmodul 6 übertragen werden. Vielmehr werden Nutzungsdatensätze von Nutzern der Kartendaten 2, insbesondere von Kraftfahrzeugen, an das Datenauswertungsmodul 6 übertragen. Die Nutzungsdatensätze umfassen einen Bezeichner eines Kartenobjekts und zumindest einen eine Bewegung des Nutzers bezüglich des Kartenobjekts beschreibenden Bewegungsparameter.

Es sei beispielhaft angenommen, dass ein bestimmter Link mit der Link ID "6210" das Attribut AA1=0 aufweist, es sich also um eine Landstraße handelt. Für diesen Link wird aufgrund des globalen Regelsatzes 3 ein Wert AA2=80% vergeben. Mit einer recht hohen Wahrscheinlichkeit von 80% sind also die Verkehrsteilnehmer in diesem Straßenabschnitt verlässlich.

Der Link 6210 weist ferner das Attribut SL=100 auf, es gilt also eine Höchstgeschwindigkeit von 100 km/h. Zahlreiche Fahrzeuge, die den Straßenabschnitt 6210 passieren, melden ihre Fahrdaten über eine mobile Datenverbindung an einen zentralen Server (ein sogenanntes "Backend"), wo die Daten verarbeitet werden. Bei dem zentralen Server kann es sich um das Datenauswertungsmodul 6 handeln. Ebenso können die Nutzungsdatensätze unverarbeitet oder in verarbeiteter Form von dem Server an das Datenauswertungsmodul 6 übertragen werden.

Einer der Bewegungsparameter betrifft die tatsächliche Momentangeschwindigkeit. Bei der Auswertung der zahlreichen Nutzungsdatensätze mittels eines Machine-Learning-Verfahrens, das zur Erkennung wiederkehrender Muster in den Daten geeignet ist, macht das Datenauswertungsmodul 6 die folgende Entdeckung. Die Momentangeschwindigkeit der auf dem Link 6210 fahrenden Fahrzeuge beträgt für eine durchgängige Zeitspanne von jeweils 28 Minuten ca. 100 km/h. Für eine daran anschließende Zeitspanne von jeweils ca. 2 Minuten beträgt die Momentangeschwindigkeit jedoch nur noch durchschnittlich 20 km/h. Zugleich vergrößert sich die statistische Streuung (bzw. Varianz) der Momentangeschwindigkeit. Nach Ende der ca. zweiminütigen Zeitspanne folgt wieder die beschriebene Zeitspanne von ca. 28 Minuten. Aus dieser Beobachtung kann geschlossen werden, dass der Link 6210 eine Bushaltestelle aufweist, die halbstündlich angefahren wird.

In Abhängigkeit der derart ausgewerteten Nutzungsdatensätze kann nunmehr der Korrekturdatensatz 4 wie folgt erstellt werden. Da an einer Bushaltestelle mit wesentlich größerer Wahrscheinlichkeit Fußgänger vorhanden sind als auf einer freien Landstraße, wird in dem Korrekturdatensatz 4 für den Link 6210 der Wert AA2=20% zugewiesen. Ferner könnte mittels des Korrekturdatensatzes 4 einem Attribut, das das Vorhandensein einer Bushaltestelle kennzeichnet, der Wert 1 zugewiesen werden.

### Bezugszeichenliste

- 1: Rohdaten der digitalen Karte
- 2: Kartendaten
- 3: Globaler Regelsatz
- 4: Korrekturdatensatz
- 5: Datenverarbeitungsanlage (Compiler)
- 6: Datenauswertungsmodul

## Patentansprüche

1. Computerimplementiertes Verfahren zur Erzeugung von Kartendaten (2) einer digitalen Karte aus Rohdaten (1) der digitalen Karte,
- wobei die Rohdaten (1) ein Kartenobjekt und je einen dem Kartenobjekt zugeordneten Wert zumindest eines Attributs umfassen,
- wobei die Kartendaten (2) das Kartenobjekt und einen dem Kartenobjekt zugeordneten Wert eines abgeleiteten Attributs umfassen,
- wobei zur Erzeugung der Kartendaten (2) ein globaler Regelsatz (3) angewandt wird, wobei der globale Regelsatz (3) zumindest eine Zuordnungsregel umfasst, wobei die Zuordnungsregel zumindest einem Wert zumindest eines Attributs der Rohdaten (1) genau einen Wert des abgeleiteten Attributs zuweist,
**dadurch gekennzeichnet, dass**
- zur Erzeugung der Kartendaten (2) ferner ein objektspezifischer Korrekturdatensatz (4) angewandt wird, wobei der objektspezifische Korrekturdatensatz (4) für ein Kartenobjekt genau einen Wert des abgeleiteten Attributs umfasst,
- wobei dem Kartenobjekt der Kartendaten (2) der in dem Korrekturdatensatz (4) enthaltene Wert des abgeleiteten Attributs zugewiesen wird.

2. Verfahren nach Anspruch 1, wobei die Kartendaten (2) einen dem Kartenobjekt zugeordneten Bezeichner umfassen, wobei der Korrekturdatensatz (4) für das Kartenobjekt dessen Bezeichner und den Wert des abgeleiteten Attributs umfasst.

3. Verfahren nach einem der vorhergehenden Ansprüche mit den zusätzlichen Schritten:
- Empfangen eines Nutzungsdatensatzes von einem Nutzer der Kartendaten (2), umfassend einen Bezeichner eines Kartenobjekts und zumindest einen eine Bewegung des Nutzers bezüglich des Kartenobjekts beschreibenden Bewegungsparameter,
- Erstellen oder Aktualisieren des Korrekturdatensatzes (4) in Abhängigkeit des empfangenen Nutzungsdatensatzes.

4. Datenverarbeitungsanlage (5) zur Erzeugung von Kartendaten (2) einer digitalen Karte aus Rohdaten (1) der digitalen Karte
- wobei die Rohdaten (1) ein Kartenobjekt und je einen dem Kartenobjekt zugeordneten Wert zumindest eines Attributs umfassen,
- wobei die Kartendaten (2) das Kartenobjekt und einen dem Kartenobjekt zugeordneten Wert eines abgeleiteten Attributs umfassen,
- wobei die Datenverarbeitungsanlage (5) eingerichtet ist, zur Erzeugung der Kartendaten (2) einen globaler Regelsatz (3) anzuwenden, wobei der globale Regelsatz (3) zumindest eine Zuordnungsregel umfasst, wobei die Zuordnungsregel zumindest einem Wert zumindest eines Attributs der Rohdaten (1) genau einen Wert des abgeleiteten Attributs zuweist,
**dadurch gekennzeichnet, dass**
- die Datenverarbeitungsanlage (5) eingerichtet ist, zur Erzeugung der Kartendaten (2) ferner einen objektspezifischen Korrekturdatensatz (4) anzuwenden, wobei der objektspezifische Korrekturdatensatz (4) für ein Kartenobjekt genau einen Wert des abgeleiteten Attributs umfasst, und
- die Datenverarbeitungsanlage (5) eingerichtet ist, dem Kartenobjekt der Kartendaten (2) den in dem Korrekturdatensatz (4) enthaltenen Wert des abgeleiteten Attributs zuzuweisen.

5. Datenverarbeitungsanlage (5) nach Anspruch 4, wobei die Kartendaten (2) einen dem Kartenobjekt zugeordneten Bezeichner umfassen, wobei der Korrekturdatensatz (4) für das Kartenobjekt dessen Bezeichner und den Wert des abgeleiteten Attributs umfasst.

6. Datenverarbeitungsanlage (5) nach einem der vorhergehenden Ansprüche mit einem Datenauswertungsmodul (6), wobei das Datenauswertungsmodul (6) eingerichtet ist,
- einen Nutzungsdatensatz von einem Nutzer der Kartendaten (2), umfassend einen Bezeichner eines Kartenobjekts und zumindest einen eine Bewegung des Nutzers bezüglich des Kartenobjekts beschreibenden Bewegungsparameter, zu empfangen und
- den Korrekturdatensatz (4) in Abhängigkeit des empfangenen Nutzungsdatensatzes zu erstellen oder zu aktualisieren.

## Claims

1. Computer-implemented method for generating map data (2) of a digital map from raw data (1) of the digital map,
- wherein the raw data (1) comprise a map object and one value each of at least one attribute, which value is associated with the map object,
- wherein the map data (2) comprise the map object and a value of a derived attribute, which value is associated with the map object,
- wherein the map data (2) are generated by applying a global set of rules (3), wherein the global set of rules (3) comprises at least one association rule, wherein the association rule assigns precisely one value of the derived attribute to at least one value of at least one attribute of the raw data (1),
**characterized in that**
- the map data (2) are generated by further applying an object-specific correction data record (4), wherein the object-specific correction data record (4) comprises, for a map object, precisely one value of the derived attribute,
- wherein the value of the derived attribute that is contained in the correction data record (4) is assigned to the map object of the map data (2).

2. Method according to Claim 1, wherein the map data (2) comprise a descriptor associated with the map object, wherein the correction data record (4) comprises, for the map object, the descriptor thereof and the value of the derived attribute.

3. Method according to either of the preceding claims, having the additional steps of:
- receiving a use data record from a user of the map data (2), comprising a descriptor of a map object and at least one movement parameter describing a movement of the user relative to the map object,
- creating or updating the correction data record (4) on the basis of the received use data record.

4. Data processing installation (5) for generating map data (2) of a digital map from raw data (1) of the digital map,
- wherein the raw data (1) comprise a map object and one value each of at least one attribute, which value is associated with the map object,
- wherein the map data (2) comprise the map object and a value of a derived attribute, which value is associated with the map object,
- wherein the data processing installation (5) is configured to generate the map data (2) by applying a global set of rules (3), wherein the global set of rules (3) comprises at least one association rule, wherein the association rule assigns precisely one value of the derived attribute to at least one value of at least one attribute of the raw data (1),
**characterized in that**
- the data processing installation (5) is configured to generate the map data (2) by further applying an object-specific correction data record (4), wherein the object-specific correction data record (4) comprises, for a map object, precisely one value of the derived attribute, and
- the data processing installation (5) is configured to assign the value of the derived attribute that is contained in the correction data record (4) to the map object of the map data (2).

5. Data processing installation (5) according to Claim 4, wherein the map data (2) comprise a descriptor associated with the map object, wherein the correction data record (4) comprises, for the map object, the descriptor thereof and the value of the derived attribute.

6. Data processing installation (5) according to one of the preceding claims, having a data evaluation module (6), wherein the data evaluation module (6) is configured
- to receive a use data record from a user of the map data (2), comprising a descriptor of a map object and at least one movement parameter describing a movement of the user relative to the map object, and
- to create or update the correction data record (4) on the basis of the received use data record.

## Revendications

1. Procédé mis en œuvre par ordinateur pour la génération de données cartographiques (2) d'une carte numérique à partir de données brutes (1) de la carte numérique,
- les données brutes (1) comprenant un objet de carte et respectivement une valeur d'au moins un attribut associée à l'objet de carte,
- les données cartographiques (2) comprenant l'objet de carte et une valeur d'un attribut dérivé associée à l'objet de carte,
- un jeu de règles global (3) étant appliqué pour la génération des données cartographiques (2), le jeu de règles global (3) comprenant au moins une règle d'association, la règle d'association affectant exactement une valeur de l'attribut dérivé à au moins une valeur d'au moins un attribut des données brutes (1),
**caractérisé en ce que**
- un jeu de données de correction (4) spécifique à l'objet est en outre appliqué pour la génération des données cartographiques (2), le jeu de données de correction (4) spécifique à l'objet comprenant exactement une valeur de l'attribut dérivé pour un objet de carte,
- les données cartographiques (2) de la valeur de l'attribut dérivé contenue dans le jeu de données de correction (4) étant affectées à l'objet de carte.

2. Procédé selon la revendication 1, les données cartographiques (2) comprenant un indicateur associé à l'objet de carte, le jeu de données de correction (4) pour l'objet de carte comprenant son indicateur et la valeur de l'attribut dérivé.

3. Procédé selon l'une des revendications précédentes, comprenant les étapes supplémentaires suivantes :
- réception d'un jeu de données d'utilisation de la part d'un utilisateur des données cartographiques (2), comprenant un indicateur d'un objet de carte et au moins un paramètre de mouvement décrivant un mouvement de l'utilisateur par rapport à l'objet de carte,
- création ou actualisation du jeu de données de correction (4) en fonction du jeu de données d'utilisation reçu.

4. Équipement de traitement de données (5) destiné à la génération de données cartographiques (2) d'une carte numérique à partir de données brutes (1) de la carte numérique,
- les données brutes (1) comprenant un objet de carte et respectivement une valeur d'au moins un attribut associée à l'objet de carte,
- les données cartographiques (2) comprenant l'objet de carte et une valeur d'un attribut dérivé associée à l'objet de carte,
- l'équipement de traitement de données (5) étant conçu pour, en vue de la génération des données cartographiques (2), appliquer un jeu de règles global (3), le jeu de règles global (3) comprenant au moins une règle d'association, la règle d'association affectant exactement une valeur de l'attribut dérivé à au moins une valeur d'au moins un attribut des données brutes (1),
**caractérisé en ce que**
- l'équipement de traitement de données (5) est conçu pour, en vue de la génération des données cartographiques (2), appliquer en outre un jeu de données de correction (4) spécifique à l'objet, le jeu de données de correction (4) spécifique à l'objet comprenant exactement une valeur de l'attribut dérivé pour un objet de carte,
- l'équipement de traitement de données (5) est conçu pour affecter les données cartographiques (2) de la valeur de l'attribut dérivé contenue dans le jeu de données de correction (4) à l'objet de carte.

5. Équipement de traitement de données (5) selon la revendication 4, les données cartographiques (2) comprenant un indicateur associé à l'objet de carte, le jeu de données de correction (4) pour l'objet de carte comprenant son indicateur et la valeur de l'attribut dérivé.

6. Équipement de traitement de données (5) selon l'une des revendications précédentes comprenant un module d'échange de données (6), le module d'échange de données (6) étant conçu pour :
- recevoir un jeu de données d'utilisation de la part d'un utilisateur des données cartographiques (2), comprenant un indicateur d'un objet de carte et au moins un paramètre de mouvement décrivant un mouvement de l'utilisateur par rapport à l'objet de carte, et
- créer ou actualiser le jeu de données de correction (4) en fonction du jeu de données d'utilisation reçu.
